# EUROPÄISCHE PATENTANMELDUNG

(11) **EP 0 741 004 A2**
(43) Veröffentlichungstag der Anmeldung: **06.11.1996**
(21) Anmeldenummer: 96106939.0
(22) Anmeldetag: 02.05.1996
(51) Int. Cl.: B32B 25/10

(54) **Bahnförmiges Verbundflächengebilde zur Herstellung von Schuhoberteilen insbesondere von Applikationen auf Schuhoberteilen**

(30) Priorität: 03.05.1995 DE 19515727
(71) Anmelder: Continental Aktiengesellschaft, 30165 Hannover (DE)
(72) Erfinder: Evers, Jürgen, 31228 Peine (DE); Hildebrandt, Gustav, 31749 Auetal (DE); Kruse, Hans-Hinrich, Dr., 30890 Barsinghausen (DE); Bartholmei, Peter, Dr., 37073 Göttingen (DE); Gerlach, Torsten, 37154 Northeim (DE); Hartmann, Hans-Werner, 37154 Northeim (DE); Weber, Thomas, 37115 Duderstadt (DE); Lindenthal, Gabriele, 37154 Northeim (DE)

(57) **Zusammenfassung**

Die Erfindung bezieht sich auf ein bahnförmiges Verbundflächengebilde aus einem Kunstfaservlies und einer mit diesem verbundenen Polymerschicht zur Herstellung von Schuhoberteilen, insbesondere von Applikationen auf Schuhoberteilen.

Um gut verarbeitbare Materialien für Schuhoberteile bzw. Applikationen auf Schuhoberteilen bereitzustellen, die eine verbesserte Adhäsion zwischen Schuhoberteil und den mit diesen in Berührung kommenden Gegenstand aufweisen, wird vorgeschlagen, ein bahnförmiges Verbundflächengebilde, das auf der Innenseite aus einem bindemittelfreien, thermofixierten Nadelvlies und einer außen mit diesem zusammenvulkanisierten kompakten Gummischicht besteht, die aus einem Kautschuk des Typs EPDM (Ethylen-Propylen-Dienmonomer-Kautschuk), CSM (Chlorsulfonierter Polyethylen Kautschuk), CR (Chloroprenkautschuk), EVA (Ethylen-Vinylacetat-Kautschuk), VMQ (Methylsilicon-Kautschuk) gebildet ist, zu verwenden.

## Beschreibung

Die Erfindung betrifft ein bahnförmiges Verbundflächengebilde aus einem Kunstfaservlies und einer mit diesem verbundenen Polymerschicht zur Herstellung von Schuhoberteilen, insbesondere von Applikationen auf Schuhoberteilen.

Bisher sind Schuhoberteilmaterialien bekannt, die aus mit Thermoplast beschichteten Vliesen gefertigt sind. Die Oberfläche des Schuhoberteilmaterials wird also durch die Eigenschaften des Kunststoffes charakterisiert. Dieser verleiht dem Schuhoberteilmaterial eine glatte Oberfläche. Wenn aber Anforderungen an eine gute Adhäsion (hohe Haftreibung) zwischen Schuhoberteil und anderen Gegenständen (z. B. Fußball) gestellt werden, sind solche Schuhoberteilmaterialien ungeeignet. Außerdem weisen diese Schuhoberteile eine geringe Verschleißfestigkeit auf.

Des weiteren sind auch Materialien für Schuhoberteile bekannt, die aus mit Gummi beschichtetem Gewebe hergestellt sind. Solche Oberteilmaterialien haben unter anderem den Nachteil, daß sie schlechte Dehnungseigenschaften aufweisen und damit auch ungünstige Trageeigenschaften besitzen.
Bereits bei der Herstellung von Schuhoberteilmaterialien aus mit Gummi beschichteten Geweben ergeben sich Probleme, da das Gewebe leicht zu einer Faltenbildung neigt. Beim Ausstanzen von Teilen aus mit Gummi beschichteten Geweben (z. B. für Applikationen) tritt außerdem ein Ausfransen der Teile auf, die auf dem Schuh unansehnlich sind.

Der Erfindung liegt die Aufgabe zugrunde, gut verarbeitbare Materialien für Schuhoberteile bzw. Applikationen auf Schuhoberteilen bereitzustellen, die eine verbesserte Adhäsion (hohe Haftreibung) zwischen Schuhoberteil und den mit diesen in Berührung kommenden Gegenstand aufweisen.

Gelöst wird diese Aufgabe erfindungsgemäß dadurch, daß bahnförmiges Verbundflächengebilde auf der Innenseite aus einem bindemittelfreien, thermofixierten Nadelvlies und einer außen mit diesem zusammenvulkanisierten kompakten Gummischicht besteht, die aus einem Kautschuk des Typs EPDM (Ethylen-Propylen-Dienmonomer-Kautschuk), CSM (Chlorsulfonierter Polyethylen Kautschuk), CR (Chloroprenkautschuk), EVA (Ethylen-Vinylacetat-Kautschuk), VMQ (Methylsilicon-Kautschuk) gebildet ist.

Schuhe mit Schuhoberteilen bzw. Applikationen auf Schuhoberteilen, die aus dem erfindungsgemäßen bahnförmigen Verbundflächengebilde bestehen bzw. das erfindungsgemäße bahnförmige Verbundflächengebilde aufweisen, zeichnen sich besonders dadurch aus, daß die durch das Verbundflächengebilde besetzten Stellen eine gute äußere Verformbarkeit aufweisen, d.h., bei Berührung dieser Schuhoberteilstellen mit einem anderen Gegenstand (z. B. Fußball) kann sich dieser, wenn auch nur für kurze Zeit, an den Stellen des Schuhoberteils mit dem erfindungsgemäßen Verbundflächengebilde, einformen. Diese Verformbarkeit beruht einerseits auf den Eigenschaften des Vlieses, das ein großes und weiches Volumen zur Verfügung stellt. Andererseits wird die Verformbarkeit von der Elastizität des eingesetzten Gummis beeinflußt.

Durch den durch das erfindungsgemäße Verbundflächengebilde entstehenden Hafteffekt wird auch eine Effet-Gebung des haftenden Gegenstandes (z. B. Fußball) möglich. Unterstützt wird dieser Hafteffekt bzw. die Griffigkeit der Oberfläche durch die Klebeeigenschaften des Gummi, die bei EPDM, CSM, CR, EVA oder VMQ besonders gut ausgeprägt sind. Diese Gummispezies zeichnen sich auch noch dadurch aus, daß sie selbst eine ansprechende Farbe aufweisen, bzw. sich unkompliziert einfärben lassen. Des weiteren sind sie witterungsstabil.

Außerdem hat das erfindungsgemäße Verbundflächengebilde auf Schuhoberteilen den Vorteil, daß es einen geringen Abrieb aufweist und somit auch Schuhoberteilstellen geschützt werden können, die besonders mechanisch beansprucht werden, wie Schuhspitzen oder Schuhfersen. Es sind aber auch noch andere Stellen denkbar, an denen besonders große mechanische Beanspruchungen auftreten und somit das erfindungsgemäße Verbundflächenmaterial von Vorteil ist.

Da überraschenderweise eine sehr hohe Haftung (größer 160 N/5 cm) zwischen dem eingesetzten Gummimaterial und dem Vlies besteht, wird das erfindungsgemäße Verbundflächengebilde auch den Anforderungen der Schuhindustrie gerecht, was z. B. bei einem Gummi-Gewebe-Verbund meist nicht der Fall ist. Deshalb kann das erfindungsgemäße Verbundflächengebilde als Schuhoberteilmaterial eingesetzt werden, d.h., daß der gesamte Schuh aus dem erfindungsgemäßen Material besteht.
Dabei kommen weitere Vorteile dieses Materials zum Tragen. So hat es eine hohe Verschleißfestigkeit und hervorragende Dehnungseigenschaften sowie schuhklimatisierende Eigenschaften, die sich auf den Tragekomfort positiv auswirken.

Bei der Herstellung des erfindungsgemäßen Verbundflächengebildes wird das elastische Verhalten des Gummis ausgenutzt, was ein Aufvulkanisieren des Gummis auf den Vlies ermöglicht, so daß keine zusätzliche Klebeschicht erforderlich wird. Mit dem Vulkanisiervorgang kann gleichzeitig die Strukturierung der Gummioberfläche erfolgen. Es wird somit einfach möglich, großflächig und strukturiertes bahnförmiges Verbundflächengebilde herzustellen, was als Gesamtschuhoberteilmaterial verwendet werden kann.

Es ist aber, wie bereits erwähnt, auch möglich, Applikationen aus dem erfindungsgemäßen Verbundflächengebilde auf Schuhoberteile aufzubringen. Die Applikationen können einfach und sauber aus dem Ganzen des Verbundflächengebildes ausgestanzt werden. Für die Aufbringung der Applikation ist es unerheblich, aus was das Schuhoberteilmaterial besteht. Die Applikationen können dann auf mechanisch stark beanspruchte Stellen aufgebracht werden.

Durch das eingesetzte, bindemittelfreie, thermofixierte Nadelvlies wird ein Vliesmaterial eingesetzt, das besonders kompakt ist, aber trotzdem nicht versteifend wirkt, was sich vorteilhaft auf das erfindungsgemäße Verbundflächengebilde bemerkbar macht.

Günstig ist, wenn das Nadelvlies aus Polyester-Stapelfasern gebildet wird, da diese bei den Vulkanisationstemperaturen temperaturbeständig sind. Außerdem ist das Polyestermaterial aufgrund seines mechanischen Verhaltens und seinem Einfluß bezüglich des "Schuhklimas" für die Anwendung als Vliesmaterial in dem erfindungsgemäßen Verbundflächengebilde vorteilhaft. Prinzipiell sind noch andere Fasern z. B. Polyamidfasern geeignet.

Das eingesetzte Vlies ist besonders günstig, da es eine definierte Dehnung aufweist, und eine hohe Weiterreiß- und Stichausreißfestigkeit aufweist.

Vorteilhafterweise soll die Stärke des Nadelvlieses zwischen 0,5 bis 5 mm betragen, was von der Anwendung des erfindungsgemäßen Verbundflächengebildes als Applikation auf Schuhobermaterial oder als Gesamtschuhobermaterial abhängt. Wiederum abhängig vom Anwendungsgebiet des erfindungsgemäßen Verbundflächengebildes soll das Nadelvlies ein Flächengewicht von 50 bis 1500 g/m² aufweisen.

Die Stärke des Nadelvlieses soll mindestens das Doppelte der Stärke der Gummischicht betragen. Durch die Kombination eines dicken Vlieses und einer relativ dünnen Gummibeschichtung werden die eingangs beschriebenen Vorteile des Verbundflächengebildes bezüglich der Verformbarkeit und des daraus resultierenden Adhäsionseffektes zu anderen Gegenständen besonders gut realisiert. Je nach Anwendung, ob das Verbundflächengebilde als Applikation oder als Gesamtschuhobermaterial verwendet werden soll, soll die Stärke der Gummischicht 0,1 bis 4,0 mm betragen.

Besonders günstig für die Verformbarkeit des erfindungsgemäßen Verbundflächengebildes ist es, wenn die Oberfläche der Gummischicht eine Struktur aufweist. Prinzipiell sind dabei dem Design keine Grenzen gesetzt. Eine mögliche Strukturgebung kann durch den Abdruck einer Gewebeoberfläche erfolgen.

Herausragend hat sich eine Struktur bewährt, die ein regelmäßiges Muster aus näpfchenartigen Vertiefungen und zwischen diesen angeordneten schmalen Erhöhungen aufweist. Durch diese Struktur wird eine Oberflächenvergrößerung der Kontaktfläche des Schuhoberteils zum Gegenstand, der an dem Schuhoberteil eine besonders gute Haftreibung haben soll, erzielt. Als besonders günstig haben sich 10 bis 50 Vertiefungen pro cm² erwiesen.

Das erfindungsgemäße bahnförmige Verbundflächengebilde kann, wie bereits erwähnt, als Applikation auf Schuhoberteilen oder als Gesamtschuhoberteil eingesetzt werden. Das erfindungsgemäße Material kann z. B. für Freizeit- oder Sportschuhe verwendet werden. Um die Hafteigenschaften des erfindungsgemäßen Verbundflächengebildes am besten ausnutzen zu können, wäre es z. B. vorteilhaft, dieses Material für die Herstellung von Fußballschuhen oder für Schuhe für Freikletterer zu verwenden. Dabei können die Schuhe futterlos oder aber auch mit Futter verarbeitet werden.

Nachfolgend wird ein Ausführungsbeispiel anhand einer Zeichnung gezeigt:

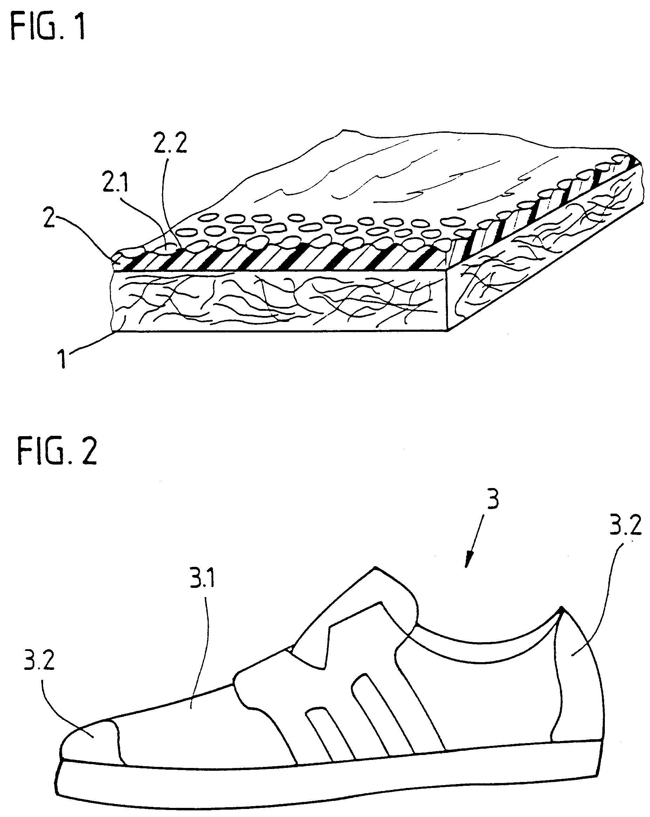

Die Figur 1 stellt den Querschnitt des erfindungsgemäßen bahnförmigen Verbundflächengebildes dar.

Das Nadelvlies 1 ist bedeckt mit einer Gummischicht 2, die z. B. aus Chloroprenkautschuk (CR) gefertigt ist. Die Gummischicht 2 weist näpfchenartige Vertiefungen 2.1 und schmale Erhöhungen 2.2 auf. Das Nadelvlies 1 wird aus Polyester-Stapelfasern hergestellt. Das Nadelvlies (Stärke: 1,5 mm) wird anschließend mit einer Chloroprenplatte, die eine Stärke von 0,5 mm aufweist, in einer automatischen Vulkanisiermaschine (Auma) vulkanisiert. Mit dem Vulkanisiervorgang geht die Formgebung der Chloroprenkautschukschicht einher, das heißt, die näpfchenartigen Vertiefungen 2.1 und die schmalen Erhöhungen 2.2 werden mittels einer mitlaufenden, das Abbild der Vertiefungen und Erhöhungen abformenden, Matrize in die Chloroprenkautschukschicht eingeprägt.

Das erhaltene bahnförmige Verbundflächengebilde ist für Schuhoberteile, insbesondere für Applikationen auf Schuhoberteilen geeignet.

Figur 2 zeigt die Seitenansicht eines Freizeit- oder Sportschuhes 3, der ein Schuhoberteil 3.1 aufweist.

Auf das Schuhoberteil 3.1 sind an der Schuhspitze und an der Schuhferse, das heißt an Stellen des Schuhoberteils, die mechanisch stark beansprucht werden, Applikationen 3.2 aus dem erfindungsgemäßen, bahnförmigen Verbundflächengebilde aufgeklebt oder aufgesteppt.

## Patentansprüche

1. Bahnförmiges Verbundflächengebilde aus einem Kunstfaservlies und einer mit diesem verbundenen Polymerschicht zur Herstellung von Schuhoberteilen, insbesondere von Applikationen auf Schuhoberteilen,
**dadurch gekennzeichnet,**
daß es auf der Innenseite aus einem bindemittelfreien, thermofixierten Nadelvlies (1) und einer außen mit diesem zusammenvulkanisierten kompakten Gummischicht (2) besteht, die aus einem Kautschuk des Typs EPDM, CSM, CR, EVA oder VMQ gebildet ist.

2. Verbundflächengebilde nach Anspruch 1,
dadurch gekennzeichnet,
daß die Oberfläche der Gummischicht (2) eine bei der Vulkanisation in sie eingeformte Struktur aufweist.

3. Verbundflächengebilde nach den Ansprüchen 1 oder 2,
dadurch gekennzeichnet,
daß die Struktur als Abdruck einer Gewebeoberfläche ausgebildet ist.

4. Verbundflächengebilde nach einem der Ansprüche 1 bis 3,
dadurch gekennzeichnet,
daß die Struktur ein regelmäßiges Muster aus näpfchenartigen Vertiefungen (2.1) und zwischen diesen angeordneten schmalen Erhöhungen (2.2) bildet.

5. Verbundflächengebilde nach Anspruch 4,
dadurch gekennzeichnet,
daß die Struktur 10 bis 50 Vertiefungen (2.1) pro m² aufweist.

6. Verbundflächengebilde nach einem der Ansprüche 1 bis 5,
dadurch gekennzeichnet,
daß die Stärke der Gummischicht (2) 0,1 bis 4,0 mm beträgt.

7. Verbundflächengebilde nach einem der Ansprüche 1 bis 6,
dadurch gekennzeichnet,
daß das Nadelvlies (1) aus Polyester-Stapelfasern gebildet ist.

8. Verbundflächengebilde nach einem der Ansprüche 1 bis 7,
dadurch gekennzeichnet,
daß die Stärke des Nadelvlieses (1) 0,5 bis 5,0 mm beträgt.

9. Verbundflächengebilde nach einem der Ansprüche 1 bis 8,
dadurch gekennzeichnet,
daß die Stärke des Nadelvlieses (1) mindestens das Doppelte der Stärke der Gummischicht (2) beträgt.

10. Verbundflächengebilde nach einem der Ansprüche 1 bis 9,
dadurch gekennzeichnet,
daß das Nadelvlies (1) ein Flächengewicht von 50 bis 1500 g/cm² aufweist.

11. Schuh, bei dem das Oberteil (3.1) und / oder Applikationen (3.2) auf dem Oberteil (3.1) aus einem Verbundflächengebilde nach einem oder mehreren der vorhergehenden Ansprüche bestehen.
